# EUROPÄISCHE PATENTSCHRIFT

(11) **EP 2 989 317 B1**
(45) Veröffentlichungstag und Bekanntmachung des Hinweises auf die Patenterteilung: **13.01.2021**
(21) Anmeldenummer: 14706611.2
(22) Anmeldetag: 26.02.2014
(51) Int. Cl.: F02M 55/02, F02F 7/00, F02M 69/46

(54) **HALTER ZUR BEFESTIGUNG EINES BRENNSTOFFVERTEILERS AN EINER BRENNKRAFTMASCHINE**
HOLDER FOR FASTENING A FUEL DISTRIBUTOR TO AN INTERNAL COMBUSTION ENGINE
SUPPORT DE FIXATION D'UN DISTRIBUTEUR DE CARBURANT SUR UN MOTEUR À COMBUSTION INTERNE

(30) Priorität: 23.04.2013 DE 102013207367
(43) Veröffentlichungstag der Anmeldung: 02.03.2016
(73) Patentinhaber: Robert Bosch GmbH, 70442 Stuttgart (DE)
(72) Erfinder: LANG, Klaus, 70439 Stuttgart (DE); REHWALD, Andreas, 74321 Bietigheim-Bissingen (DE)
(86) Internationale Anmeldenummer: PCT/EP2014/053685
(87) Internationale Veröffentlichungsnummer: WO 2014/173560

(56) Entgegenhaltungen:
- EP-A1- 2 657 504
- DE-A1- 19 654 848
- DE-A1-102010 046 344
- US-A- 5 397 206
- US-A1- 2010 202 856
- US-B1- 6 591 801

## Beschreibung

### Stand der Technik

Die Erfindung betrifft einen Halter zur Befestigung einer Komponente, insbesondere eines Brennstoffverteilers, an einer Brennkraftmaschine. Speziell betrifft die Erfindung das Gebiet der Brennstoffeinspritzanlagen von Brennkraftmaschinen, wobei über Brennstoffeinspritzventile unter hohem Druck stehender Brennstoff in zugeordnete Brennräume der Brennkraftmaschine eingespritzt wird.

Aus der nicht vorveröffentlichten EP 2 657 504 A1 ist bereits ein Halter bekannt, der zur Befestigung einer Komponente, insbesondere eines Brennstoffverteilers, an einer Brennkraftmaschine dient. Hierbei sind ein Befestigungsmittel und ein Dämpfungselement vorgesehen. Das Befestigungsmittel ist mit der Brennkraftmaschine verbindbar. Die Komponente ist mittels des Dämpfungselements mittelbar mit dem Befestigungsmittel verbindbar. Dabei werden durch das Befestigungsmittel über einen bügelförmigen Grundkörper die Dämpfungselemente beaufschlagt.

Aus der DE 10 2010 046 344 A1 ist eine Motorbaugruppe mit einer Kraftstoffleiste bekannt, die an einer Nockenabdeckung befestigt ist. Die Motorbaugruppe kann einen Zylinderkopf, die Nockenabdeckung und eine Kraftstoffleistenbaugruppe umfassen. Die Kraftstoffleistenbaugruppe kann die Kraftstoffleiste, eine Klammerbaugruppe und eine Kraftstoffeinspritzeinrichtung umfassen. Die Klammerbaugruppe kann an der Kraftstoffleiste fixiert sein und sie kann ein Befestigungselement und ein Isolationselement umfassen. Das Befestigungselement kann mit der Nockenabdeckung in Eingriff stehen und die Kraftstoffleiste an dieser befestigen. Bei einer möglichen Ausgestaltung kann die Befestigungsbaugruppe Befestigungselemente, Abstandshalter und eine Hülse sowie ein erstes sowie ein zweites Isolationselement aufweisen. Die Befestigungselemente können einen Kopf und einen Schaft mit einem Gewindebereich aufweisen, der mit einer Öffnung in der Nockenabdeckung in Eingriff steht, um die Kraftstoffleiste an der Nockenabdeckung zu befestigen. Das Befestigungselement erstreckt sich durch die Hülse. Das erste Isolationselement kann axial zwischen einer ersten Seite der Klammer und der Nockenabdeckung angeordnet sein. Das zweite Isolationselement kann axial zwischen der zweiten Seite der Klammer und dem Kopf des Befestigungselements angeordnet sein. Die Isolationselemente können aus einem elastomeren Material gebildet sein, das für eine Dämpfung sorgt.

Die aus der DE 10 2010 046 344 A1 bekannte Motorbaugruppe hat den Nachteil, dass die Isolationselemente eine nahezu konstante Federsteifigkeit aufgrund ihres rechteckigen Profils vorgeben. Dadurch ergibt sich im jeweiligen Anwendungsfall gegebenenfalls nur eine begrenzte Wirksamkeit bezüglich der Schwingungsdämpfung. Ferner kommt es im Betrieb zu temperaturbedingten Längenänderungen der einzelnen Elemente der Befestigung. Aufgrund der zum Einsatz kommenden, unterschiedlichen Werkstoffe resultiert dies in einer effektiven Längenänderung an den Isolationselementen, was zu einer Änderung der Vorspannung der Isolationselemente führt. Im Ergebnis hängt somit die momentane Vorspannung der Isolationselemente von der Betriebstemperatur ab. Dadurch ergibt sich auch eine entsprechende Abhängigkeit bei der Schwingungsdämpfung. Die Wirksamkeit der Schwingungsdämpfung ändert sich somit im Betrieb. Speziell unterscheiden sich somit die Wirkungen der Schwingungsdämpfung beim Betriebsbeginn und nach einer gewissen Betriebsdauer. Eine Abstimmung der Befestigung auf eine hohe Betriebstemperatur, wie sie nach einer gewissen Betriebsdauer erreicht wird, führt somit zwangsläufig zu einer schlechten Schwingungsdämpfung beim Betriebsbeginn und umgekehrt.

### Offenbarung der Erfindung

Der erfindungsgemäße Halter mit den Merkmalen des Anspruchs 1 hat den Vorteil, dass eine verbesserte Schwingungsdämpfung ermöglicht ist. Speziell kann in Bezug auf den jeweiligen Anwendungsfall eine geeignete Anpassung der Schwingungsdämpfung vorgenommen werden.

Durch die in den Unteransprüchen aufgeführten Maßnahmen sind vorteilhafte Weiterbildungen des im Anspruch 1 angegebenen Halters möglich.

Der Halter dient beispielsweise zur Befestigung eines Brennstoffverteilers einer Brennstoffeinspritzanlage an einem Zylinderkopf der Brennkraftmaschine. Der Halter kann allerdings auch zur Befestigung einer anderen Komponente an der Brennkraftmaschine dienen. Ferner kann die Befestigung an der Brennkraftmaschine auch indirekt über ein oder mehrere Zwischenstücke erfolgen. Die Komponente, insbesondere der Brennstoffverteiler, und die Brennkraftmaschine sind keine Bestandteile des erfindungsgemäßen Halters. Allerdings sind Ausgestaltungen denkbar, bei denen das Halteelement integraler Bestandteil einer Komponente, insbesondere eines Brennstoffverteilers, ist und/oder bei denen an der Brennkraftmaschine, insbesondere einem Zylinderkopf, ein geeignetes Gegenstück zum Befestigen, insbesondere Einschrauben, des Befestigungsmittels des Halters ausgeformt ist.

Der Brennstoffverteiler, der über ein oder mehrere Halter an der Brennkraftmaschine befestigbar ist, dient im Betrieb als Brennstoffspeicher. Durch Druckschwankungen im Brennstoffverteiler und in mit dem Brennstoffverteiler verbundenen Injektoren werden Druckpulsationen erzeugt, die Geräusche verursachen können. Diese Druckpulsationen können unter anderem in Form von Körperschall an den Kontaktpunkten zum Zylinderkopf weitergegeben werden. Zur Dämpfung dient das Entkoppelelement. Der Halter ermöglicht neben einer mechanischen Entkopplung gegebenenfalls auch eine thermische und geometrische Entkopplung der Komponente, insbesondere des Brennstoffverteilers, zur Brennkraftmaschine. An einem Halter können hierbei auch mehrere Entkoppelelemente zum Einsatz kommen. Solche Entkoppelelemente sind vorzugsweise als viskoelastische Entkoppelelemente ausgestaltet.

Vorteilhaft ist es, dass das Entkoppelelement so ausgeformt ist, dass wenigstens in einer axialen Richtung entlang einer Achse des Befestigungskörpers eine nicht lineare Federkennlinie vorgegeben ist, die eine Abhängigkeit einer entlang der Achse des Befestigungskörpers auf das Halteelement wirkenden Rückstellkraft von einer Auslenkung des Halteelements entlang der Achse des Befestigungskörpers relativ zu dem Befestigungskörper beschreibt. Entlang der Achse des Befestigungskörpers erfolgt vorzugsweise die Befestigung des Befestigungskörpers mittels des Befestigungsmittels. Das Befestigungsmittel kann hierbei insbesondere als Befestigungsschraube ausgestaltet sein, die beispielsweise in eine entsprechende Gewindebohrung der Brennkraftmaschine eingeschraubt wird. Dadurch ist eine zuverlässige Fixierung des Befestigungskörpers an der Brennkraftmaschine möglich.

Durch die nicht lineare Federkennlinie entlang der Achse des Befestigungskörpers kann eine Abstimmung in Bezug auf auftretende Schwingungen erfolgen. Hierbei ist es auch möglich, dass vergleichsweise geringe Auslenkungen, wie sie auch bei Temperaturänderungen auftreten, in einem Bereich vergleichsweise geringer Steigung der Federkennlinie erfolgen. Für größere Auslenkungen kann dann eine vergleichsweise große Steigung der Federkennlinie wirksam werden.

Zusätzlich ist es allerdings auch von Vorteil, dass das Entkoppelelement nicht von der Befestigungskraft des Befestigungsmittels an der Brennkraftmaschine beaufschlagt wird. Hierfür kann eine getrennte Einstellung einer Vorspannung des Entkoppelelements vorgesehen sein. Die nicht lineare Federkennlinie sowie ein durch die Vorspannung des Entkoppelelements vorgegebener Startpunkt auf der nicht linearen Federkennlinie im unbelasteten Zustand, das heißt bei verschwindender Auslenkung des Halteelements entlang der Achse des Befestigungskörpers relativ zu dem Befestigungskörper, können dann in Bezug auf den jeweiligen Anwendungsfall vorgegeben werden, um die Entkopplung weiter zu verbessern.

Vorteilhaft ist es auch, dass das Entkoppelelement so ausgeformt ist, dass zumindest in einer radialen Richtung, die senkrecht zu einer Achse des Befestigungskörpers orientiert ist, eine nicht lineare Federkennlinie vorgegeben ist, die eine Abhängigkeit einer entlang der radialen Richtung auf das Halteelement wirkenden Rückstellkraft von einer Auslenkung des Halteelements entlang der radialen Richtung relativ zu dem Befestigungskörper beschreibt. Somit kann in der radialen Richtung eine geeignete Abstimmung durch die Wahl der Federkennlinie vorgegeben werden. Dies verbessert die Entkopplung, die durch den Halter erzielt werden kann.

Hierbei kann auch ein definiertes, dynamisches Verhalten sowohl in der axialen Richtung als auch in der radialen Richtung erzielt werden, indem das Entkoppelelement geeignet ausgeformt wird. Je nach Ausgestaltung ist hierbei auch eine weitgehend unabhängige Abstimmung einerseits in axialer Richtung und andererseits in radialer Richtung möglich.

Vorteilhaft ist es auch, dass das Entkoppelelement so ausgeformt ist, dass eine erste radiale Richtung und eine zweite radiale Richtung, die senkrecht zu einer Achse des Befestigungskörpers orientiert sind, existieren, für die sich eine erste Federkennlinie, die eine Abhängigkeit einer entlang der ersten radialen Richtung auf das Halteelement wirkenden Rückstellkraft von einer Auslenkung des Halteelements entlang der ersten radialen Richtung relativ zu dem Befestigungskörper beschreibt, und eine zweite Federkennlinie, die eine Abhängigkeit einer entlang der zweiten radialen Richtung auf das Halteelement wirkenden Rückstellkraft von einer Auslenkung des Halteelements entlang der zweiten radialen Richtung relativ zu dem Befestigungskörper beschreibt, unterscheiden. Indem die Steifigkeit des Entkoppelelements nicht rotationssymmetrisch ausgeführt wird, können somit geeignete Abstimmung auf richtungsmäßig unterschiedliche Beanspruchungen in radialen Richtungen erfolgen.

Hierbei ist es möglich, dass die erste Federkennlinie und die zweite Federkennlinie als erste lineare Federkennlinie und als zweite lineare Federkennlinie ausgestaltet sind, die unterschiedliche Steigungen aufweisen, während in axialer Richtung eine nicht lineare Federkennlinie vorgegeben ist. Vorzugsweise handelt es sich aber zumindest bei der ersten Federkennlinie oder der zweiten Federkennlinie um eine nicht lineare Federkennlinie. Weiter vorzugsweise sind sowohl die erste Federkennlinie als auch die zweite Federkennlinie als erste nicht lineare Federkennlinie und als zweite nicht lineare Federkennlinie vorgegeben.

Im Betrieb kann es dann in Bezug auf die jeweils erfolgende Auslenkung des Halteelements relativ zu dem Befestigungskörper zu einer entsprechend überlagerten Beanspruchung des Entkoppelelements kommen. Wenn der Brennstoffverteiler beispielsweise als Brennstoffverteilerleiste ausgestaltet ist, dann können entlang der Brennstoffverteilerleiste wirkende Schwingungen beziehungsweise Schwingungskomponenten und senkrecht zu der Längsachse der Brennstoffverteilerleiste wirkende Schwingungen beziehungsweise Schwingungskomponenten unterschiedliche Dämpfungen erfordern. Dies kann durch eine geeignete Ausgestaltung des Entkoppelelements erreicht werden, wobei gezielt ein definiertes, dynamisches Verhalten in allen drei Raumrichtungen über die Abstimmung der jeweiligen Steifigkeiten in den drei Raumrichtungen ermöglicht ist. Dadurch kann auch in allen drei Raumrichtungen ein metallischer Kontakt im Bereich des Halteelements verhindert werden. Dies ergibt ein wirkungsvolles, definiertes, mechanisch dämpfendes Verhalten der Entkopplung in den einzelnen Raumrichtungen.

Vorteilhaft ist es, dass das Entkoppelelement zumindest eine Ausformung aufweist, die mit einer Ausformung des Halteelements formschlüssig zusammen wirkt. Entsprechend ist es vorteilhaft, dass das Entkoppelelement zumindest eine Ausformung aufweist, die mit einer Ausformung eines Vorspannelements, das mit dem Befestigungskörper verbunden ist, formschlüssig zusammen wirkt. Durch den jeweils gebildeten Formschluss wird eine örtliche Fixierung des Entkoppelelements erzielt, die unabhängig von einer eventuellen Vorspannung ist. Eine gegebenenfalls erforderliche Vorspannung kann auf geeignete Weise durch das Vorspannelement aufgebracht werden. Über das Vorspannelement, das unabhängig von dem Befestigungsmittel mit dem Befestigungskörper verbunden werden kann, ist eine gezielte Einstellung der Vorspannung möglich.

Vorteilhaft ist es auch, dass das Entkoppelelement zumindest eine Ausnehmung aufweist, die an einem Rand einer Mantelfläche des Entkoppelelements ausgestaltet ist. Vorteilhaft ist es auch, dass das Entkoppelelement zumindest eine Ausnehmung aufweist, die innerhalb einer Mantelfläche des Entkoppelelements ausgestaltet ist. Dadurch kann zu Beginn oder bei kleinen Auslenkungen zunächst eine vergleichsweise niedrige Federkonstante realisiert werden. Bei größeren Auslenkungen wird die Ausnehmung gewissermaßen weggedrückt, so dass sich anschließend eine vergleichsweise große Federsteifigkeit ergibt Somit kann eine nicht lineare Charakteristik der Federkennlinie erzielt werden.

Die Ausnehmung am Rand der Mantelfläche des Entkoppelelements kann in vorteilhafter Weise als Kantenabrundung, als Fase, die sich über weniger als die Hälfte der axialen Dicke des Entkoppelelements entlang einer Achse des Befestigungskörpers erstreckt, oder als Anschrägung, die sich über wenigstens die Hälfte einer axialen Dicke des Entkoppelelements entlang der Achse des Befestigungskörpers erstreckt, ausgestaltet sein. Somit kann über die Formgestaltung des Entkoppelelements insbesondere entlang der Achse des Befestigungskörpers eine nicht lineare Federkennlinie realisiert werden. Über die Ausgestaltung der Ausnehmung kann der Verlauf der Federkennlinie geeignet modifiziert werden. Hierbei können auch mehrere Ausnehmungen an dem Entkoppelelement vorgesehen sein.

Vorteilhaft ist es auch, dass das Entkoppelelement an zumindest einer Mantelfläche wenigstens eine Stufe aufweist. Ferner ist es vorteilhaft, dass das Entkoppelelement an zumindest einer Stirnfläche wenigstens eine Stufe aufweist. Hierdurch ergeben sich weitere Möglichkeiten zur Modifikation des Verlaufs der Federkennlinie. Wenn die Stufe an der Stirnfläche des Entkoppelelements vorgesehen ist, dann kann nach einer gewissen Auslenkung, bei der die Stufe gewissermaßen weggedrückt ist, ein mehr oder weniger ausgeprägter Knick in der Federkennlinie realisiert werden. Die Stufe kann hierbei als abgeschrägte Stufe oder als nicht abgeschrägte Stufe ausgestaltet sein. Bei einer Ausgestaltung als abgeschrägte Stufe kann beispielsweise ein überproportional ansteigender Verlauf der Federkennlinie realisiert werden, der nach dem Wegdrücken der Stufe in einen linearen Verlauf übergeht. Hierbei sind allerdings auch Kombinationen mit anderen Formgestaltungen möglich.

Vorteilhaft ist es, dass das Entkoppelelement an zumindest einer Stirnfläche eine Kontaktgeometrie aufweist, die in einer Umfangsrichtung bezüglich einer Achse des Befestigungskörpers variiert. Somit kann die Kontaktgeometrie über den Umfang des Entkoppelelements variierend ausgestaltet sein, wodurch gezielt eine nicht rotationssymmetrische Vorgabe der Steifigkeit erzielt werden kann. Speziell ist es hierbei vorteilhaft, dass die Kontaktgeometrie an der Stirnfläche des Entkoppelelements in der Umfangsrichtung segmentiert ist. Im Ausgangszustand, insbesondere im entlasteten Zustand des Entkoppelelements, ergibt sich somit nur ein örtlicher Kontakt. Bei einer gewissen Beaufschlagung des Entkoppelelements kann allerdings durch Überdrücken gegebenenfalls ein Kontakt hergestellt werden. Entsprechend ist es vorteilhaft, dass ein radialer Kontaktanteil der Kontaktgeometrie an der Stirnfläche des Entkoppelelements in der Umfangsrichtung variiert. Hierbei können insbesondere vorteilhafte Geometrien erzielt werden, die bei einem Verkippen des Halteelements relativ zu der Achse des Befestigungskörpers eine mit der Verkippung zunehmende Steifigkeit ermöglichen.

Es ist anzumerken, dass die Maßnahmen zur Ausformung des Entkoppelelements für sich nicht nur einmal, sondern auch mehrfach an einem Entkoppelelement realisiert werden können. Ferner können solche Maßnahmen zur Ausformung des Entkoppelelements auch auf geeignete Weise miteinander kombiniert werden. Somit können gezielte Anpassungen an den jeweiligen Anwendungsfall erfolgen.

Daher können je nach Ausgestaltung ein oder mehrere Vorteile erzielt werden. Eine akustische Abkopplung kann über eine axiale Vordehnung durch einstellbare Dämpfungsmaße eingestellt werden. Damit ist eine Optimierung bezüglich der akustischen Wirksamkeit möglich. Ferner kann die Bauteilstreuung reduziert werden.

Ein Frequenz abhängiger Steifigkeitsverlauf sowie eine Frequenz abhängige Dämpfung können durch die mögliche Einstellbarkeit dynamisch abgestimmt werden. Die Einstellbarkeit ist insbesondere über ein Vordehnmaß und die Formgestaltung, insbesondere eine Dämpfergeometrie, möglich. Hierdurch ergibt sich eine einstellbare und abstimmbare Übertragungsfunktion.

Neben der Dämpfung von mechanischen Schwingungen können auch eingebrachte, thermische Spannungen der Brennkraftmaschine auf den Brennstoffverteiler reduziert werden. Dadurch ist eine bessere Materialausnutzung und somit eine Kostensenkung bezüglich des Brennstoffverteilers möglich.

Außerdem kann ein Toleranzausgleich erzielt werden. Hierbei können zulässige Toleranzen der verwendeten Bauteile gegebenenfalls vergrößert werden. Somit ist eine Toleranzentfeinerung möglich. Dies erlaubt eine kostengünstigere Herstellung.

Ferner kann eine Optimierung auf eine minimale Bauteilbeanspruchung erfolgen. Dies betrifft insbesondere das Halteelement, das Entkoppelelement sowie den Brennstoffverteiler.

Das Halteelement, das als Verbindungsstück zum Brennstoffverteiler dienen kann, kann je nach Anwendungsfall mit dem Brennstoffverteiler verbunden werden oder Bestandteil des Brennstoffverteilers sein. Somit kann das Halteelement an dem Brennstoffverteiler montiert sein oder formschlüssig oder stoffschlüssig mit dem Brennstoffverteiler verbunden sein. Speziell kann das Halteelement an den Brennstoffverteiler angelötet werden.

Die Ausführung der vorzugsweise viskoelastischen Abkopplung durch das zumindest eine Entkoppelelement kann auch ohne schraubenförmiger Befestigung erfolgen. Hierbei ist ein Schnappen, Klemmen oder eine Integration der Abkoppelung in vorhandene Anbauteile, wie ein Ansaugmodul, einen Ventildeckel, ein Nockenwellengetriebe und andere Anbauten ebenfalls möglich.

### Kurze Beschreibungen der Zeichnungen

Bevorzugte Ausführungsbeispiele der Erfindung sind in der nachfolgenden Beschreibung unter Bezugnahme auf die beigefügten Zeichnungen, in denen sich entsprechende Elemente mit übereinstimmenden Bezugszeichen versehen sind, näher erläutert. Es zeigen:
Fig. 1 eine Brennkraftmaschine, einen Halter und einen Brennstoffverteiler in einer auszugsweisen, schematischen Schnittdarstellung entsprechend einem ersten Ausführungsbeispiel der Erfindung;
Fig. 2 eine Brennkraftmaschine und einen Halter in einer auszugsweisen, schematischen Schnittdarstellung entsprechend einem zweiten Ausführungsbeispiel der Erfindung;
Fig. 3 einen Halter in einer auszugsweisen, schematischen Schnittdarstellung entsprechend einem dritten Ausführungsbeispiel der Erfindung;
Fig. 4 ein Entkoppelelement eines Halters in einer auszugsweisen, schematischen, räumlichen Darstellung entsprechend einem Beispiel;
Fig. 5 ein Entkoppelelement eines Halters in einer auszugsweisen, schematischen, räumlichen Darstellung entsprechend einem Beispiel;
Fig. 6A ein Entkoppelelement eines Halters in einer schematischen, räumlichen Darstellung entsprechend einem Beispiel;
Fig. 6B eine Federkennlinie für einen Halter mit dem in Fig. 6A dargestellten Entkoppelelement entsprechend dem Beispiel;
Fig. 7A ein Entkoppelelement eines Halters in einer schematischen Schnittdarstellung entsprechend einem Beispiel;
Fig. 7B eine Federkennlinie für einen Halter mit dem in Fig. 7A dargestellten Entkoppelelement entsprechend dem Beispiel;
Fig. 8A ein Entkoppelelement eines Halters in einer schematischen Schnittdarstellung entsprechend einem Beispiel;
Fig. 8B eine Federkennlinie für einen Halter mit dem in Fig. 8A dargestellten Entkoppelelement entsprechend dem Beispiel;
Fig. 9 ein Entkoppelelement eines Halters in einer auszugsweisen, schematischen Schnittdarstellung entsprechend einem vierten Ausführungsbeispiel der Erfindung;
Fig. 10 ein Entkoppelelement eines Halters in einer auszugsweisen, schematischen Schnittdarstellung entsprechend einem fünften Ausführungsbeispiel der Erfindung;
Fig. 11 ein Entkoppelelement eines Halters in einer auszugsweisen, schematischen Schnittdarstellung entsprechend eines sechsten Ausführungsbeispiels der Erfindung;
Fig. 12 ein Entkoppelelement eines Halters in einer auszugsweisen, schematischen Schnittdarstellung entsprechend einem Beispiel;
Fig. 13 ein Entkoppelelement eines Halters in einer auszugsweisen, schematischen Schnittdarstellung entsprechend einem Beispiel;
Fig. 14 ein Entkoppelelement eines Halters in einer auszugsweisen, schematischen Schnittdarstellung entsprechend einem Beispiel;
Fig. 15 ein Entkoppelelement eines Halters in einer auszugsweisen, schematischen Schnittdarstellung entsprechend einem Beispiel;
Fig. 16 ein Entkoppelelement eines Halters in einer auszugsweisen, schematischen Schnittdarstellung entsprechend einem Beispiel;
Fig. 17 ein Entkoppelelement eines Halters in einer auszugsweisen, schematischen Schnittdarstellung entsprechend einem Beispiel;
Fig. 18 ein Entkoppelelement eines Halters in einer auszugsweisen, schematischen Schnittdarstellung entsprechend einem Beispiel;
Fig. 19 ein Entkoppelelement eines Halters in einer auszugsweisen, schematischen Schnittdarstellung entsprechend einem Beispiel;
Fig. 20 ein Entkoppelelement eines Halters in einer auszugsweisen, schematischen Schnittdarstellung entsprechend einem Beispiel und
Fig. 21 ein Entkoppelelement eines Halters in einer auszugsweisen, schematischen Schnittdarstellung entsprechend einem Beispiel.

### Ausführungsformen der Erfindung

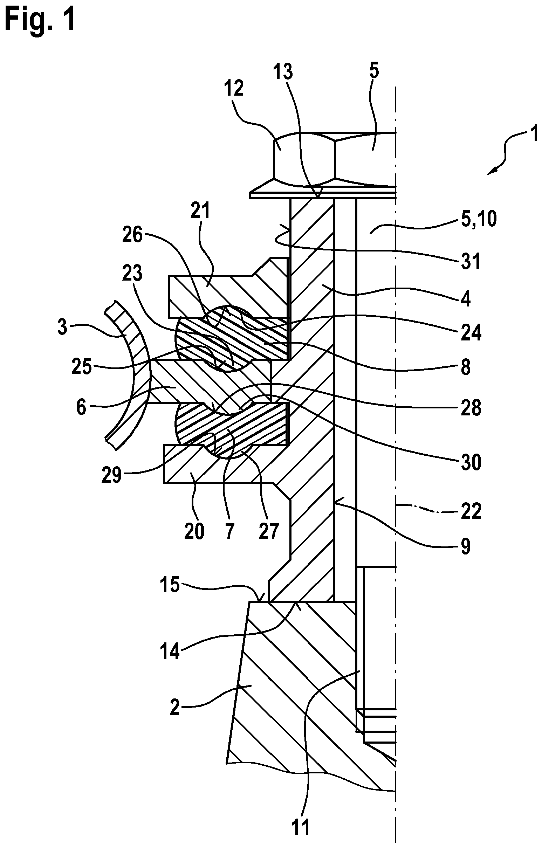

Fig. 1 zeigt einen Halter 1, ein Teil einer Brennkraftmaschine 2, insbesondere einen Zylinderkopf 2, und einen Brennstoffverteiler 3, insbesondere eine Brennstoffverteilerleiste 3, in einer auszugsweisen, schematischen Schnittdarstellung entsprechend einem ersten Ausführungsbeispiel. Der Halter 1 weist einen Befestigungskörper 4, ein Befestigungsmittel 5, ein Halteelement 6 und Entkoppelelemente 7, 8 auf. Der Befestigungskörper 4 weist in diesem Ausführungsbeispiel eine Durchgangsbohrung 9 auf, durch die sich ein Gewindebolzen 10 des Befestigungsmittels 5 erstreckt. Der Gewindebolzen 10 ist in eine Gewindebohrung 11 der Brennkraftmaschine 2 eingeschraubt. Das Befestigungsmittel 5 weist außerdem einen Schraubkopf 12 auf. Der Schraubkopf 12 des Befestigungsmittels 5 wirkt mit einer Stirnseite 13 des Befestigungskörpers 4 zusammen. Ferner stützt sich der Befestigungskörper 4 mit einer weiteren Stirnseite 14 an einer Oberseite 15 der Brennkraftmaschine 2 ab.

Somit ist eine zuverlässige Befestigung des Befestigungskörpers 4 des Halters 1 an der Brennkraftmaschine 2 gegeben. Die Entkoppelelemente 7, 8 werden hierbei nicht von der Befestigungskraft, die von dem Befestigungsmittel 5 aufgebracht wird, beaufschlagt. Die Befestigungskraft kann hierbei innerhalb gewisser Grenzen beliebig groß vorgegeben sein.

Der Halter 1 weist außerdem ein Stützelement 20 und ein Vorspannelement 21 auf. Das Stützelement 20 ist als ringförmiges Stützelement 20 ausgestaltet und in diesem Ausführungsbeispiel einstückig mit dem Befestigungskörper 4 ausgestaltet. Das Vorspannelement 21 ist als ringförmiges Vorspannelement 21 ausgestaltet. Bei der Montage kann das Vorspannelement 21 gegebenenfalls entlang einer Achse 22 des Befestigungskörpers 4 positioniert werden, um eine Vorspannung der Entkoppelelement 7, 8 zu erzielen. Bei der Achse 22 handelt es sich in diesem Ausführungsbeispiel um die Längsachse 22 der Durchgangsbohrung 9, die im montierten Zustand mit der Längsachse 22 des Befestigungsmittels 5 übereinstimmt. Das Vorspannelement 21 kann auf geeignete Weise mit dem Befestigungskörper 4 verbunden werden, beispielsweise durch eine Schraub-, Schweiß- oder Lötverbindung.

Das Entkoppelelement 7 ist als ringförmiges Entkoppelelement 7 ausgestaltet. Das Entkoppelelement 8 ist als ringförmiges Entkoppelelement 8 ausgestaltet. Die Entkoppelelemente 7, 8 umfassen hierbei den Befestigungskörper 4 umfänglich bezüglich der Achse 22.

Die Entkoppelelemente 7, 8 sind so ausgeformt, dass in zumindest einer Raumrichtung eine nicht lineare Federkennlinie vorgegeben ist, die eine Abhängigkeit einer auf das Halteelement 6 wirkenden Rückstellkraft von einer Auslenkung des Halteelements 6 relativ zu dem Befestigungskörper 4 beschreibt. Das Halteelement 6 ist hierbei über die Entkoppelelemente 7, 8 sowie das Stützelement 20 und das Vorspannelement 21 an dem Befestigungskörper 4 befestigt. Hierdurch ergibt sich eine Befestigung des Brennstoffverteilers 3 an der Brennkraftmaschine 2, wobei die nicht lineare Federkennlinie bei der Befestigung entsprechend wirksam ist.

Das Entkoppelelement 8 weist Ausformungen 23, 24 auf, die bauchförmig ausgestaltet sind. Die Ausformung 23 des Entkoppelelements 8 wirkt mit einer Ausformung 25 des Halteelements 6, die als Vertiefung 25 ausgestaltet ist, formschlüssig zusammen. Ferner wirkt die Ausformung 24 des Entkoppelelements 8 mit einer Ausformung 26 des Einstellelements 21, die als Vertiefung 26 ausgestaltet ist, formschlüssig zusammen.

Außerdem weist das Entkoppelelement 7 eine Ausformung 27, die bauchförmig ausgestaltet ist, und eine Ausformung 28 auf, die als Vertiefung 28 ausgestaltet ist. Die Ausformung 27 des Entkoppelelements 7 wirkt mit einer Ausformung 29 des Stützelements 20, die als Vertiefung 29 ausgestaltet ist, formschlüssig zusammen. Ferner wirkt die Ausformung 28 des Entkoppelelements 7 mit einer Ausformung 30 des Halteelements 6, die bauchförmig ausgestaltet ist, formschlüssig zusammen.

Neben der formschlüssigen Verbindung wird durch die Ausformungen 23, 24 des Entkoppelelements 8 und die Ausformungen 27, 28 des Entkoppelelements 7 eine nicht lineare Federkennlinie realisiert.

Somit ist die Steifigkeit der Entkoppelelemente 7, 8 über die Formgestaltung vorgebbar. Hierbei kann eine rotationssymmetrische Ausgestaltung der Entkoppelelemente 7, 8 vorgegeben sein. Es sind allerdings auch nicht rotationssymmetrische Ausgestaltungen denkbar.

Der Vorspannweg kann unabhängig von der Befestigungskraft des Befestigungsmittels 5 eingestellt werden. Je nach Ausgestaltung ist dies in einer oder mehreren Raumrichtungen möglich. Anstelle eines Vorspannelements 21 können hierbei auch mehrere Vorspannelemente zum Einsatz kommen. Die Einstellbarkeit kann auch auf andere Weise als über ein Vorspannelement erzielt werden. Zum Beispiel kann die Vorspannung aus Bereichen der Befestigung des Brennstoffverteilers 3 aufgebracht werden. Die Verbindung des Vorspannelements 21 oder dergleichen kann form-, kraft- oder stoffschlüssig mit dem Befestigungskörper 4 erfolgen. Speziell ist die Vorspannung, die auf die Entkoppelelemente 7, 8 wirkt, somit unabhängig von Toleranzen von Elementen des Halters 1, insbesondere des Befestigungskörpers 4 und des Befestigungsmittels 5, das die Befestigungskraft erzeugt.

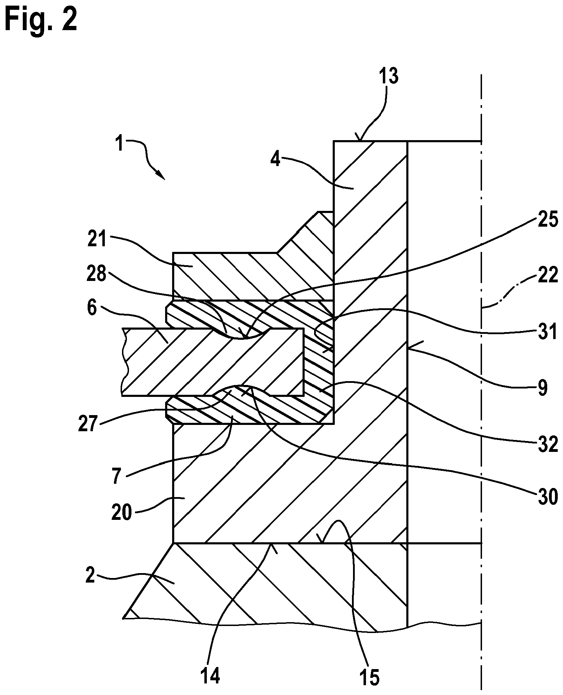

Fig. 2 zeigt eine Brennkraftmaschine 2 und einen Halter 1 in einer auszugsweisen, schematischen Schnittdarstellung entsprechend einem zweiten Ausführungsbeispiel. In diesem Ausführungsbeispiel ist die weitere Stirnseite 14 des Befestigungskörpers 4, mit dem der Befestigungskörper 4 an der Oberseite 15 der Brennkraftmaschine 2 anliegt, auch an dem Stützelement 20 ausgestaltet. Ferner ist in diesem Ausführungsbeispiel genau ein Entkoppelelement 7 vorgesehen, das sowohl an dem Stützelement 20 als auch an dem Vorspannelement 21 anliegt. Die Ausformungen 25, 30 des Halteelements 6 sind in diesem Ausführungsbeispiel als Vertiefungen 25, 30 ausgestaltet. Die Ausformungen 27, 28 des Entkoppelelements 7 sind in diesem Ausführungsbeispiel bauchförmig ausgestaltet, wobei einerseits ein Formschluss mit der Ausformung 25 und andererseits ein Formschluss mit der Ausformung 30 des Halteelements 6 gebildet ist.

Das Entkoppelelement 7 erstreckt sich in diesem Ausführungsbeispiel im Profil von dem Vorspannelement 21 entlang einer Außenseite 31 des Befestigungskörpers 4 zu dem Stützelement 20. Ein Teil 32 des Entkoppelelements 7 gewährleistet hierbei direkt eine Isolation zwischen dem Halteelement 6 und dem Befestigungskörper 4.

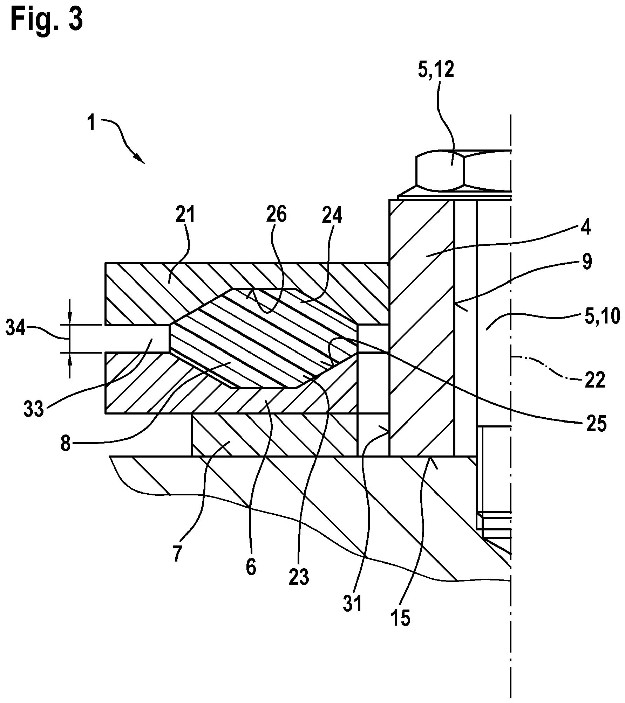

Fig. 3 zeigt einen Halter 1 in einer auszugsweisen, schematischen Schnittdarstellung entsprechend einem dritten Ausführungsbeispiel. In diesem Ausführungsbeispiel weist das Entkoppelelement 8 im Profil einen achteckigen Querschnitt auf. Das Entkoppelelement 8 ist außerdem ringförmig ausgestaltet. Die Ausformungen 23, 24 greifen in eine Vertiefung 25 des Halteelements 6 beziehungsweise eine Vertiefung 26 des Vorspannelements 21 ein. Ferner ist zwischen dem Vorspannelement 21 und dem Halteelement 6 ein Spalt 33 gebildet, der im Ausgangszustand ein Spaltmaß mit einer axialen Höhe 34 entlang der Achse 22 aufweist. Über das durch die axiale Höhe 34 definierte Spaltmaß ist eine Dehnungsbegrenzung bezüglich einer Beanspruchung des Entkoppelelements 8 gewährleistet.

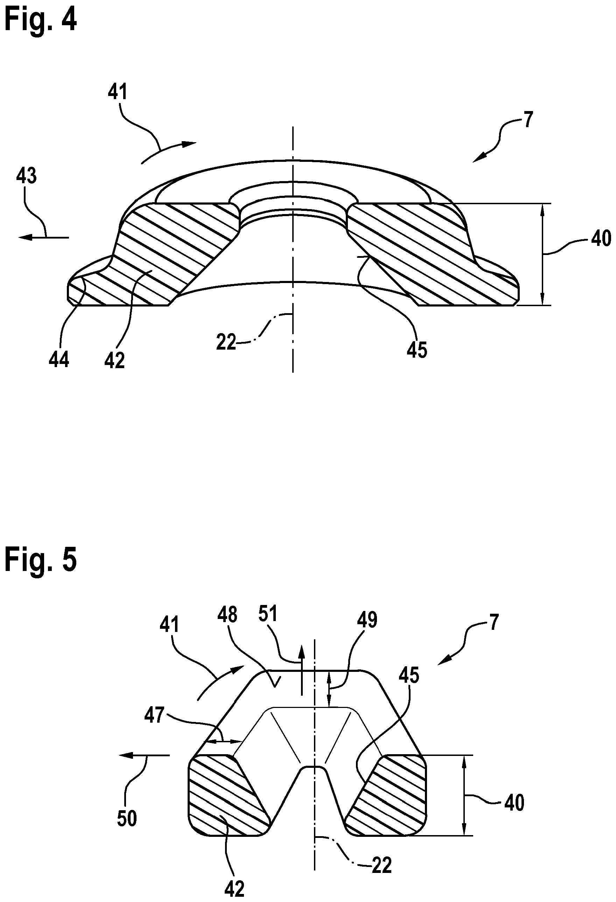

Fig. 4 zeigt ein Entkoppelelement 7 eines Halters 1 in einer auszugsweisen, schematischen, räumlichen Darstellung entsprechend einem nicht erfindungsgemäßen Ausführungsbeispiel. Das Entkoppelelement 7 weist eine axiale Dicke entlang der Achse 22 auf, wenn keine Vorspannung besteht. Das Entkoppelelement 7 ist hierbei mit einem in einer Umfangsrichtung 41 um die Achse 22 rotationssymmetrischen Querschnitt 42 ausgestaltet. Hierbei weist der Querschnitt 42 eine sich in radialer Richtung 43 erstreckende Ausbuchung 44 auf, die einen außenliegenden Rand 44 des Entkoppelelements 7 bildet. Ferner weist das Entkoppelelement 7 eine innenliegende Anschrägung 45 auf, die sich über mehr als die Hälfte der axialen Dicke 40 des Entkoppelelements 7 entlang der Achse 22 des Befestigungskörpers 4 erstreckt.

In diesem Ausführungsbeispiel kommt es bei einer Beaufschlagung des Entkoppelelements 7 in einer beliebigen radialen Richtung 43 stets zu einem vergleichbaren Anstieg einer auf das Halteelement 6 wirkenden Rückstellkraft in Abhängigkeit von der Auslenkung des Halteelements 6. Die Form der Federkennlinie ist somit unabhängig von der gewählten radialen Richtung 43.

Fig. 5 zeigt ein Entkoppelelement 7 eines Halters 1 in einer auszugsweisen, schematischen, räumlichen Darstellung entsprechend einem nicht erfindungsgemäßen Ausführungsbeispiel. In diesem Ausführungsbeispiel unterscheidet sich eine radiale Ausdehnung 47 des Entkoppelelements 7 an einer Seite 48 von einer radialen Ausdehnung 49 des Entkoppelelements 7 an der Seite 48. Die radiale Ausdehnung 47 wird hierbei in einer ersten radialen Richtung 50 betrachtet, während die radiale Ausdehnung 49 in einer zweiten radialen Richtung 51 betrachtet wird. Somit ist das Entkoppelelement 7 in diesem Ausführungsbeispiel so ausgeformt, dass eine erste radiale Richtung 50 und eine zweite radiale Richtung 51 existieren, die senkrecht zu der Achse 22 des Befestigungskörpers 4 orientiert sind, wobei sich eine erste Federkennlinie, die eine Abhängigkeit einer entlang der ersten radialen Richtung 50 auf das Halteelement 6 wirkenden Rückstellkraft von einer Auslenkung des Halteelements entlang der ersten radialen Richtung 50 relativ zu dem Befestigungskörper 4 beschreibt, und eine zweite Federkennlinie, die eine Abhängigkeit einer entlang der zweiten radialen Richtung 51 auf das Halteelement 6 wirkenden Rückstellkraft von einer Auslenkung des Halteelements 6 entlang der zweiten radialen Richtung 51 relativ zu dem Befestigungskörper 4 beschreibt, unterscheiden. Indem die Steifigkeit nicht rotationssymmetrisch vorgegeben ist, können somit unterschiedliche Federkennlinien in den radialen Richtungen 50, 51 erzielt werden.

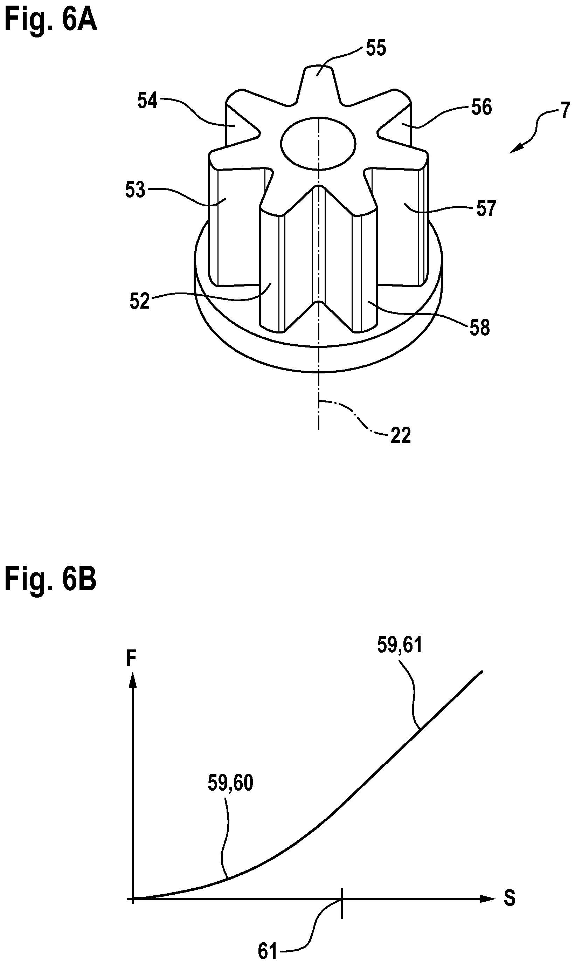

Fig. 6A zeigt eine Entkoppelelement 7 eines Halters 1 in einer schematischen, räumlichen Darstellung entsprechend einem nicht erfindungsgemäßen Ausführungsbeispiel. In diesem Ausführungsbeispiel weist das Entkoppelelement 7 Rippen 52 bis 58 auf, die sich entlang der Achse 22 erstrecken. Durch diese Rippen 52 bis 58 kann unter anderem eine Quersteifigkeit variiert werden. Bei einer Beanspruchung in axialer Richtung geben die Rippen 52 bis 58 zunächst vergleichsweise leicht nach, was einem weichen Verhalten entspricht. Wenn die Zwischenräume zwischen den Rippen 52 bis 58 gewissermaßen weggedrückt sind, dann tritt ein härteres Dehnungsverhalten auf. Dies ist auch bei Verkippungen relativ zu der Achse 22 relevant.

Fig. 6B zeigt eine Federkennlinie 59 für einen Halter 1 mit dem in Fig. 6A dargestellten Entkoppelelement 7 entsprechend dem Ausführungsbeispiel. Hierbei ist an der Abszisse eine axiale Auslenkung s des Halteelements 6 relativ zu dem Befestigungskörper 4 dargestellt, während an der Ordinate eine auf das Halteelement 6 wirkende Rückstellkraft F angetragen ist. Mit zunehmender Auslenkung s steigt die Federsteifigkeit zunächst überproportional an, was durch einen Abschnitt 60 der Federkennlinie 59 veranschaulicht ist. Ab einer Auslenkung 61 sind die Zwischenräume zwischen den Rippen 52 bis 58 gewissermaßen weggedrückt, so dass sich ein Abschnitt 61 der Federkennlinie 59 ergibt, in dem die Federkennlinie linear ansteigt, was einer konstanten Federkonstante entspricht.

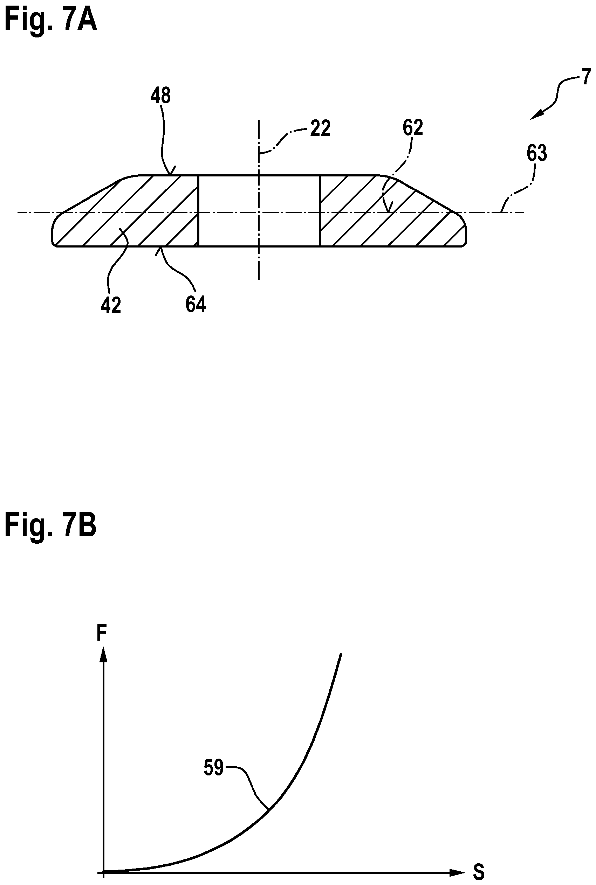

Fig. 7A zeigt ein Entkoppelelement 7 eines Halters 1 in einer schematischen Schnittdarstellung entsprechend einem nicht erfindungsgemäßen Ausführungsbeispiel. In diesem Ausführungsbeispiel nimmt eine Querschnittsfläche 62 des Entkoppelelements 7, die in einer Ebene 63 liegt, die senkrecht zu der Achse 22 orientiert ist, von der Seite 48 zu einer Seite 64 des Entkoppelelements 7 zumindest weitgehend zu. Bei einer Auslenkung des Halteelements in einer axialen Richtung entlang der Achse 22 nimmt dadurch die Rückstellkraft F, die auf das Halteelement 6 wirkt, überproportional mit der Auslenkung s zu.

Fig. 7B zeigt eine Federkennlinie 59 für den Halter 1 mit dem in Fig. 7A dargestellten Entkoppelelement 7 entsprechend dem Ausführungsbeispiel. Der überproportionale Anstieg der Federkennlinie 59 mit der Auslenkung s zeigt exemplarisch ein Verhalten, wie es durch die Ausformung des Entkoppelelements 7 möglich ist, die in Fig. 7A dargestellt ist.

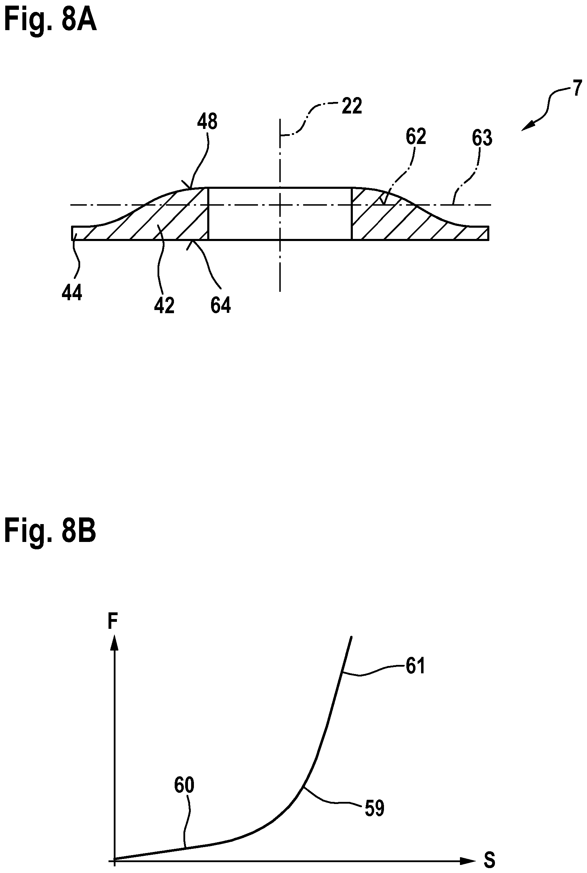

Fig. 8A zeigt ein Entkoppelelement 7 eines Halters 1 in einer schematischen Schnittdarstellung entsprechend einem nicht erfindungsgemäßen Ausführungsbeispiel. In diesem Ausführungsbeispiel ist im Querschnitt 42 eine Ausbuchtung 44 vorgesehen, die einen außenliegenden Rand 44 des Entkoppelelements 7 bildet. Entlang der Achse 22 nimmt eine in der Ebene 63 liegende Querschnittsfläche 62 des Entkoppelelements 7 von der Seite 48 bis zum Beginn des außenliegenden Randes 44 zunächst zu. Im Bereich des Randes 44 ist die Querschnittsfläche 62 entlang der Achse 22 zumindest näherungsweise konstant.

Fig. 8B zeigt eine Federkennlinie 59 für einen Halter 1 mit dem in Fig. 8A dargestellten Entkoppelelement 7 entsprechend dem Ausführungsbeispiel. Mit zunehmender axialer Auslenkung s kommt es zunächst zu einem vergleichsweise langsamen Anstieg der auf das Halteelement 6 wirkenden Rückstellkraft F in axialer Richtung. Wenn das Entkoppelelement 7 hingegen bereits stark zusammengedrückt ist, was einer großen Auslenkung s entspricht, dann ergibt sich aufgrund der nun vergleichsweise großen, wirksamen Querschnittsfläche, die gegen die Querschnittsfläche 62 des Entkoppelelements 7 einschließlich des Randes 44 konvergiert, eine vergleichsweise große Federsteifigkeit, wie es durch einen steilen Abschnitt 61 der Federkennlinie veranschaulicht ist. Zwischen einem Abschnitt 50 der Federkennlinie mit zunächst geringem Anstieg und dem Abschnitt 61 mit dem steilen Anstieg ergibt sich außerdem ein entsprechender Übergangsbereich.

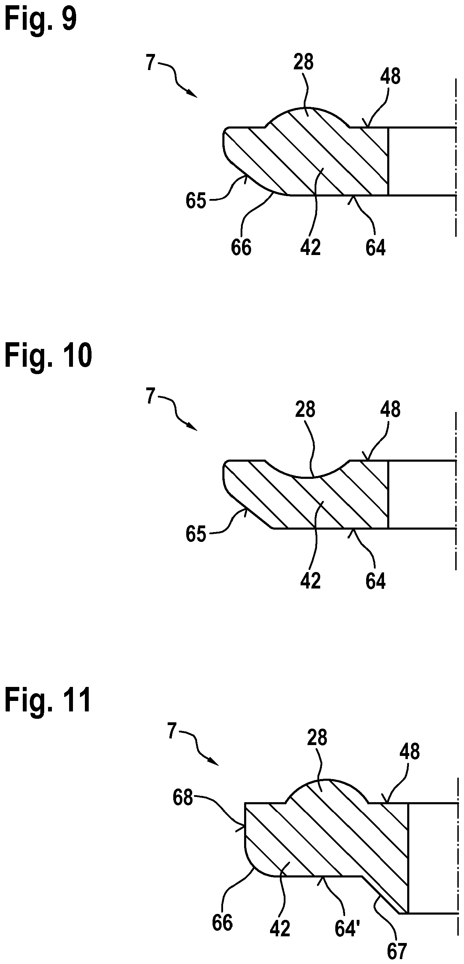

Fig. 9 zeigt ein Entkoppelelement 7 eines Halters 1 in einer auszugsweisen, schematischen Schnittdarstellung entsprechend einem vierten Ausführungsbeispiel. In diesem Ausführungsbeispiel weist das Entkoppelelement 7 nur an der Seite 48 eine bauchförmige Ausformung 28 auf. Außerdem weist das Entkoppelelement 7 eine außenliegende Anschrägung 65 auf. Ein Übergang zwischen der außenliegenden Anschrägung 65 und der Seite 64 ist als Kantenabrundung 66 ausgestaltet.

Fig. 10 zeigt ein Entkoppelelement 7 eines Halters 1 in einer auszugsweisen, schematischen Schnittdarstellung entsprechend einem fünften Ausführungsbeispiel. In diesem Ausführungsbeispiel weist das Entkoppelelement 7 eine außenliegende Anschrägung 65 auf. Außerdem weist das Entkoppelelement 7 nur an der Seite 48 eine als Vertiefung ausgestaltete Ausformung 28 auf.

Fig. 11 zeigt ein Entkoppelelement 7 eines Halters 1 in einer auszugsweisen, schematischen Schnittdarstellung entsprechend einem sechsten Ausführungsbeispiel. In diesem Ausführungsbeispiel weist das Entkoppelelement 7 nur an der Seite 48 eine bauchförmige Ausformung 28 auf. Ferner weist das Entkoppelelement 7 an der Stirnfläche 64' eine abgeschrägte Stufe 67 auf. Ferner weist das Entkoppelelement 7 an der außenliegenden Mantelfläche 68 eine Kantenabrundung 66 auf.

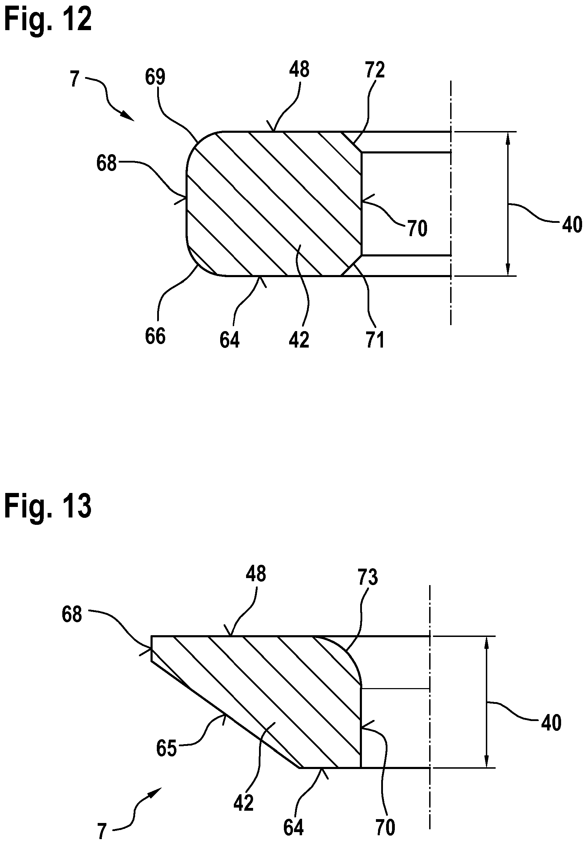

Fig. 12 zeigt ein Entkoppelelement 7 eines Halters 1 in einer auszugsweisen, schematischen Schnittdarstellung entsprechend einem nicht erfindungsgemäßen Ausführungsbeispiel. In diesem Ausführungsbeispiel weist das Entkoppelelement 7 an der außenliegenden Mantelfläche 68 Kantenabrundungen 66, 69 auf. Ferner sind an der innenliegenden Mantelfläche 70 Fasen 71, 72 ausgestaltet, die sich über weniger als eine Hälfte einer axialen Dicke 40 des Entkoppelelements 7 erstrecken. Die Kantenabrundungen 66, 69 an der Mantelfläche 68 und die Fasen 71, 72 an der innenliegenden Mantelfläche 70 stellen Ausnehmungen 66, 69, 71, 72 am Rand der Mantelflächen 68, 70 des Entkoppelelements 7 dar, da diese an die Seiten 48, 64 angrenzen.

Fig. 13 zeigt ein Entkoppelelement 7 eines Halters 1 in einer auszugsweisen, schematischen Schnittdarstellung entsprechend einem nicht erfindungsgemäßen Ausführungsbeispiel. In diesem Ausführungsbeispiel weist das Entkoppelelement 7 eine außenliegende Anschrägung 65 auf, die sich über mehr als die Hälfte der axialen Ausdehnung 40 des Entkoppelelements 7 erstreckt. Durch die außenliegende Anschrägung 67 ist eine Ausnehmung am Rand der außenliegenden Mantelfläche 68 des Entkoppelelements 7 gebildet, da die Ausnehmung 65 an die Seite 64 angrenzt. Ferner ist an der innenliegenden Mantelfläche 70 eine Kantenabrundung 73 ausgestaltet, die eine Ausnehmung 73 am Rand der innenliegenden Mantelfläche 70 bildet.

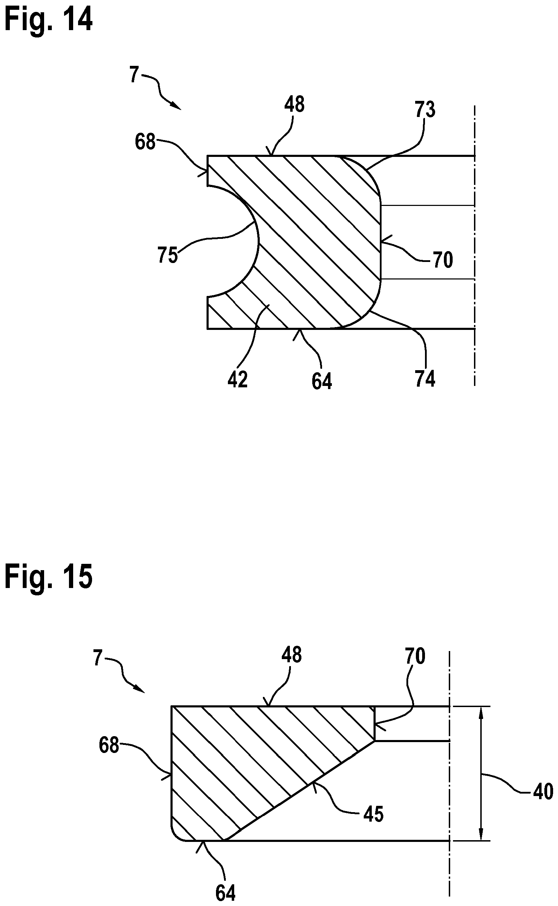

Fig. 14 zeigt ein Entkoppelelement eines Halters 1 in einer auszugsweisen, schematischen Schnittdarstellung entsprechend einem nicht erfindungsgemäßen Ausführungsbeispiel. In diesem Ausführungsbeispiel sind an der innenliegenden Mantelfläche 70 Kantenabrundungen 73, 74 vorgesehen. Ferner ist an der außenliegenden Mantelfläche 68 eine Ausnehmung 75 vorgesehen, die innerhalb der Mantelfläche 68 ausgestaltet ist. Die Ausnehmung 75 ist somit von den Seiten 48, 64 beabstandet ausgestaltet.

Fig. 15 zeigt eine Entkoppelelement 7 eines Halters 1 in einer auszugsweisen, schematischen Schnittdarstellung entsprechend einem nicht erfindungsgemäßen Ausführungsbeispiel. Hierbei ist eine innenliegende Anschrägung 45 vorgesehen, die sich zu der Seite 64 erstreckt. Die innenliegende Anschrägung 45 erstreckt sich über mehr als die Hälfte der axialen Dicke 40 des Entkoppelelements 7.

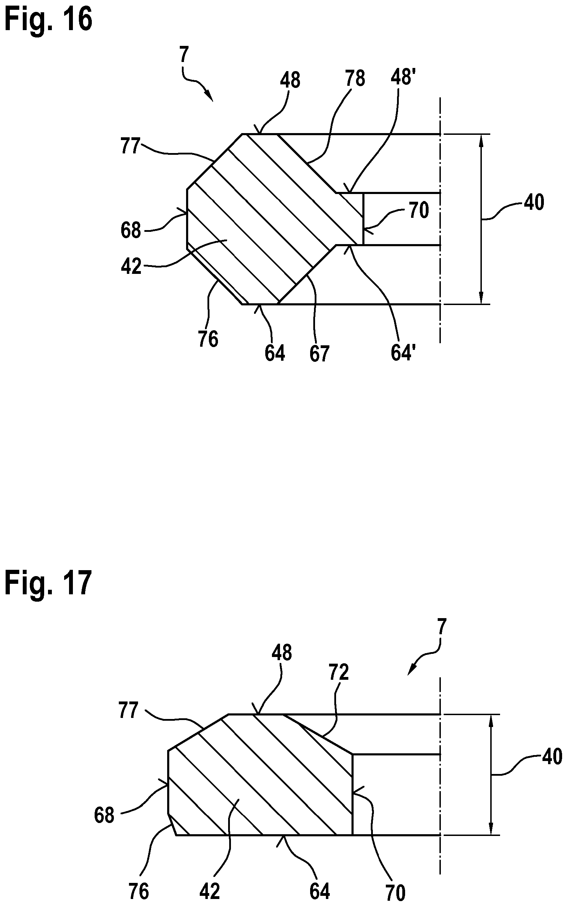

Fig. 16 zeigt ein Entkoppelelement 7 eines Halters 1 in einer auszugsweisen, schematischen Schnittdarstellung entsprechend einem nicht erfindungsgemäßen Ausführungsbeispiel. In diesem Ausführungsbeispiel weist das Entkoppelelement 7 an der außenliegenden Mantelfläche 68 Fasen 76, 77 auf. Die Fasen 76, 77 erstrecken sich hierbei jeweils über weniger als die Hälfte der axialen Dicke 40 des Entkoppelelements 7.

Ferner weist das Entkoppelelement 7 an den Seiten 48, 64 jeweils eine abgeschrägte Stufe 67, 78 auf. Somit sind gestufte Stirnflächen 64', 48' ausgestaltet.

Fig. 17 zeigt ein Entkoppelelement 7 eines Halters 1 in einer auszugsweisen, schematischen Schnittdarstellung entsprechend einem nicht erfindungsgemäßen Ausführungsbeispiel. In diesem Ausführungsbeispiel ist an der außenliegenden Mantelfläche 68 eine Fase 77 ausgestaltet, die sich über weniger als die Hälfte der axialen Dicke 40 des Entkoppelelements 7 erstreckt und an die Seite 48 angrenzt. Ferner ist an der innenliegenden Mantelfläche 70 eine Fase 72 ausgestaltet, die sich über weniger als die Hälfte der axialen Dicke 40 des Entkoppelelements 7 erstreckt und ebenfalls an die Seite 48 angrenzt. Somit sind an den jeweiligen Rand der Mantelflächen 68, 70 reichende Ausnehmungen 72, 77 gebildet. Ferner ist eine Fase 76 zwischen der Seite 64 und der außenliegenden Mantelfläche 68 vorgesehen.

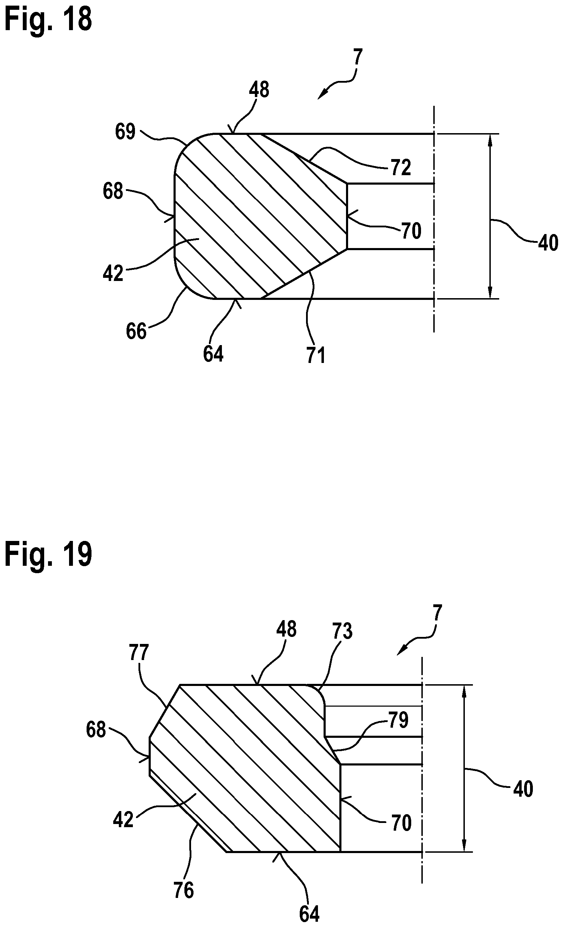

Fig. 18 zeigt ein Entkoppelelement 7 eines Halters 1 in einer auszugsweisen, schematischen Schnittdarstellung entsprechend einem nicht erfindungsgemäßen Ausführungsbeispiel. In diesem Ausführungsbeispiel sind an der innenliegenden Mantelfläche Fasen 71, 72 ausgestaltet, die sich zu der Seite 48 beziehungsweise der Seite 64 erstrecken. Die Fasen 71, 72 erstrecken sich hierbei über jeweils weniger als die Hälfte der axialen Dicke 40 des Entkoppelelements 7. Außerdem sind Kantenabrundungen 66, 69 an der außenliegenden Mantelfläche 68 ausgestaltet.

Fig. 19 zeigt ein Entkoppelelement 7 eines Halters 1 in einer auszugsweisen, schematischen Schnittdarstellung entsprechend einem nicht erfindungsgemäßen Ausführungsbeispiel. In diesem Ausführungsbeispiel sind an der außenliegenden Mantelfläche 68 Fasen 76, 77 ausgestaltet. Ferner ist an der innenliegenden Mantelfläche 70 eine Stufe 79 vorgesehen, die in diesem Ausführungsbeispiel als abgeschrägte Stufe 79 ausgestaltet ist. Ferner ist eine Kantenabrundung 73 zur Seite 48 hin vorgesehen.

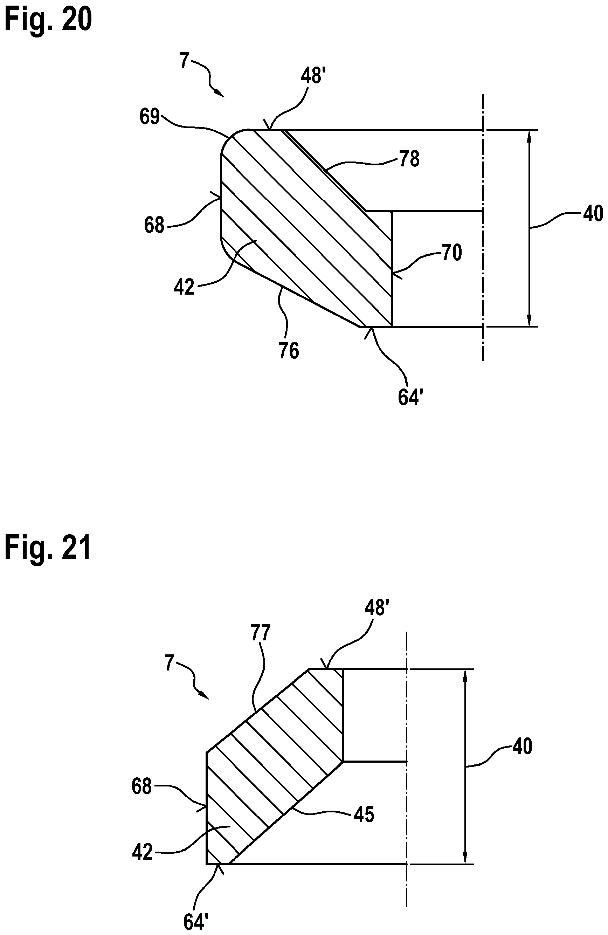

Fig. 20 zeigt ein Entkoppelelement 7 eines Halters 1 in einer auszugsweisen, schematischen Schnittdarstellung entsprechend einem nicht erfindungsgemäßen Ausführungsbeispiel. In diesem Ausführungsbeispiel ist an der Stirnfläche 64' eine Fase 76 ausgestaltet, die sich über weniger als die Hälfte der axialen Dicke 40 des Entkoppelelements 7 erstreckt. Außerdem ist eine Kantenabrundung 69 vorgesehen, die einen Übergang zwischen der außenliegenden Mantelfläche 68 und einer Stirnfläche 48' bildet. Ferner ist an der Stirnfläche 48' eine abgeschrägte Stufe 78 ausgestaltet. Die Fase 76 und die Stufe 78 können durch die Kontaktpartner abgestützt werden, wodurch sich die entstehenden Reaktionen winkelabhängig einstellen.

Fig. 21 zeigt ein Entkoppelelement 7 eines Halters 1 in einer auszugsweisen, schematischen Schnittdarstellung entsprechend einem nicht erfindungsgemäßen Ausführungsbeispiel. In diesem Ausführungsbeispiel ist an der Stirnfläche 48' eine Fase 77 ausgestaltet, die sich über weniger als die Hälfte der axialen Dicke 40 des Entkoppelelements erstreckt. Ferner ist an der Stirnfläche 64' eine Anschrägung 45 ausgestaltet, die sich über wenigstens die Hälfte der axialen Dicke 40 des Entkoppelelements 7 erstreckt. Die Fase 77 und die Anschrägung 45 können analog zu Fig. 20 durch die jeweiligen Kontaktpartner abgestützt werden.

Somit sind zahlreiche Möglichkeiten zur Ausformung eines Entkoppelelements 7 dargestellt, die gegebenenfalls auch mehrfach realisiert und auf andere Weise miteinander kombiniert werden können. Hierdurch kann das Entkoppelelement so ausgeformt werden, dass in zumindest einer Raumrichtung eine nicht lineare Federkennlinie vorgegeben ist.

Vorteilhaft ist es, dass die Ausnehmung 65, 66, 69, 71, 72, 73, 74, 76, 77 beziehungsweise die Stirnfläche 48', 64' des Entkoppelelements 7 durch das Halteelement 6 und/oder zumindest ein Gegenstück 20, 21, insbesondere das Stützelement 20 und/oder das Vorspannelement 21, durch Kontakt gestützt ist. Die Stützung erfolgt hierbei an einer Kontaktfläche der Ausnehmung 65, 66, 69, 71, 72, 73, 74, 76, 77 beziehungsweise der Stirnfläche 48', 64' des Entkoppelelements 7.

Die Erfindung ist nicht auf die beschriebenen Ausführungsbeispiele beschränkt.

## Patentansprüche

1. Halter (1) zur Befestigung einer Komponente (3), insbesondere eines Brennstoffverteilers (3), an einer Brennkraftmaschine (2) mit zumindest einem Entkoppelelement (7, 8), einem Befestigungskörper (4), einem Befestigungsmittel (5) und einem Halteelement (6), wobei der Befestigungskörper (4) mittels des Befestigungsmittels (5) an der Brennkraftmaschine (2) befestigbar ist und wobei das Halteelement (6) über das Entkoppelelement (7, 8) an dem Befestigungskörper (4) befestigt ist,
**dadurch gekennzeichnet,**
**dass** das Entkoppelelement (7, 8) so ausgeformt ist, dass in einer axialen Richtung entlang einer Achse (22) des Befestigungskörpers (4) und in einer radialen Richtung (43), die senkrecht zu einer Achse (22) des Befestigungskörpers (4) orientiert ist, eine nicht lineare Federkennlinie vorgegeben ist, die eine Abhängigkeit einer entlang der Achse (22) des Befestigungskörpers (4) auf das Halteelement (6) wirkenden Rückstellkraft (F) von einer Auslenkung (s) des Halteelements (6) entlang der Achse (22) des Befestigungskörpers (4) relativ zu dem Befestigungskörper (4) beschreibt und dass ein Vorspannelement (21) vorgesehen ist, um eine Vorspannung auf das Entkoppelelement (7, 8) aufzubringen, wobei das Vorspannelement (21), das mit dem Befestigungskörper (4) verbunden ist, formschlüssig mit dem Entkoppelelement (7, 8) zusammenwirkt und
**dass** das Entkoppelelement (7, 8) zumindest eine Ausformung (23, 28) aufweist, die mit einer Ausformung (25, 30) des Halteelements (6) formschlüssig zusammenwirkt und/oder dass das Entkoppelelement (8) zumindest eine Ausformung (24) aufweist, die mit einer Ausformung (26) des Vorspannelements (21) formschlüssig zusammenwirkt und
**dass** die Entkoppelelemente (7, 8) nicht von der Befestigungskraft, die von dem Befestigungsmittel (5) aufgebracht wird, beaufschlagt werden.

2. Halter nach Anspruch 1,
**dadurch gekennzeichnet,**
**dass** das Entkoppelelement (7, 8) so ausgeformt ist, dass eine erste radiale Richtung (50) und eine zweite radiale Richtung (51), die senkrecht zu einer Achse (22) des Befestigungskörpers (4) orientiert sind, existieren, für die sich eine erste Federkennlinie, die eine Abhängigkeit einer entlang der ersten radialen Richtung (51) auf das Halteelement (6) wirkenden Rückstellkraft (F) von einer Auslenkung (s) des Halteelements (6) entlang der ersten radialen Richtung (50) relativ zu dem Befestigungskörper (4) beschreibt, und eine zweite Federkennlinie, die eine Abhängigkeit einer entlang der zweiten radialen Richtung (51) auf das Haltelement (6) wirkenden Rückstellkraft (F) von einer Auslenkung (s) des Halteelements (6) entlang der zweiten radialen Richtung (51) relativ zu dem Befestigungskörper (4) beschreibt, unterscheiden.

3. Halter nach Anspruch 1 oder 2,
**dadurch gekennzeichnet,**
**dass** das Entkoppelelement (7) zumindest eine Ausnehmung (66, 69, 71, 72, 73, 74, 76, 77) aufweist, die am Rand einer Mantelfläche (68, 70) des Entkoppelelements ausgestaltet ist und/oder dass das Entkoppelelement (7) zumindest eine Ausnehmung (75) aufweist, die innerhalb einer Mantelfläche (68) des Entkoppelelements (7) ausgestaltet ist.

4. Halter nach Anspruch 3,
**dadurch gekennzeichnet,**
**dass** die Ausnehmung (66, 69, 71, 72, 73, 74, 76, 77) am Rand der Mantelfläche (68, 70) des Entkoppelelements (7) als Kantenabrundung (66, 69, 73, 74) als Fase (71, 72, 76, 77), die sich über weniger als die Hälfte einer axialen Dicke (40) des Entkoppelelements (7) entlang einer Achse (22) des Befestigungskörpers (4) erstreckt, oder als Anschrägung (45, 65), die sich über wenigstens die Hälfte einer axialen Dicke (40) des Entkoppelelements (7) entlang der Achse (22) des Befestigungskörpers (4) erstreckt, ausgestaltet ist.

5. Halter nach einem der Ansprüche 1 bis 4,
**dadurch gekennzeichnet,**
**dass** das Entkoppelelement (7) an zumindest einer Mantelfläche (68, 70) zumindest eine Stufe (79) aufweist und/oder das das Entkoppelelement (7) an zumindest einer Stirnfläche (48', 64') zumindest eine Stufe (67, 78) aufweist.

6. Halter nach einem der Ansprüche 1 bis 5,
**dadurch gekennzeichnet,**
**dass** das Entkoppelelement (7) an zumindest einer Stirnfläche (48', 64') eine Kontaktgeometrie aufweist, die in einer Umfangsrichtung (41) bezüglich einer Achse (22) des Befestigungskörpers (4) variiert.

7. Halter nach Anspruch 6,
**dadurch gekennzeichnet,**
**dass** die Kontaktgeometrie an der Stirnfläche (48', 64') des Entkoppelelements (7) in der Umfangsrichtung (41) segmentiert ist und/oder dass ein radialer Kontaktanteil (47, 49) der Kontaktgeometrie an der Stirnfläche (48') des Entkoppelelements (7) in der Umfangsrichtung (41) variiert.

8. Halter nach einem der Ansprüche 3 bis 7,
**dadurch gekennzeichnet,**
**dass** das Entkoppelelement (7) an der Ausnehmung (65, 66, 69, 71, 72, 73, 74, 76, 77) beziehungsweise an der Stirnfläche (48', 64') des Entkoppelelements (7) durch das Halteelement (6) und/oder zumindest ein Gegenstück (21, 26) gestützt ist.

## Claims

1. Holder (1) for fastening a component (3), in particular a fuel distributor (3), to an internal combustion engine (2), having at least one decoupling element (7, 8), one fastening body (4), one fastening means (5) and one holding element (6), wherein the fastening body (4) is fastenable by the fastening means (5) to the internal combustion engine (2), and wherein the holding element (6) is fastened by means of the decoupling element (7, 8) to the fastening body (4), **characterized**
**in that** the decoupling element (7, 8) is shaped such that, in an axial direction along an axis (22) of the fastening body (4) and in a radial direction (43) which is oriented perpendicular to an axis (22) of the fastening body (4), a non-linear spring characteristic curve is predefined which describes a dependency of a resetting force (F), acting on the holding element (6) along the axis (22) of the fastening body (4), of a deflection (s) of the holding element (6) along the axis (22) of the fastening body (4) relative to the fastening body (4), and
**in that** a preloading element (21) is provided in order to impart a preload to the decoupling element (7, 8), wherein the preloading element (21), which is connected to the fastening body (4), interacts in positively locking fashion with the decoupling element (7, 8), and in that the decoupling element (7, 8) has at least one formation (23, 28) which interacts in positively locking fashion with a formation (25, 30) of the holding element (6) and/or in that the decoupling element (8) has at least one formation (24) which interacts in positively locking fashion with a formation (26) of the preloading element (21), and
**in that** the decoupling elements (7, 8) are not acted on by the fastening force imparted by the fastening means (5) .

2. Holder according to Claim 1,
**characterized**
**in that** the decoupling element (7, 8) is shaped such that a first radial direction (50) and a second radial direction (51) which are oriented perpendicular to an axis (22) of the fastening body (4) exist, for which a first spring characteristic curve, which describes a dependency of a resetting force (F), acting on the holding element (6) along the first radial direction (51), of a deflection (s) of the holding element (6) along the first radial direction (50) relative to the fastening body (4), and a second spring characteristic curve, which describes a dependency of a resetting force (F), acting on the holding element (6) along the second radial direction (51), of a deflection (s) of the holding element (6) along the second radial direction (51) relative to the fastening body (4), differ.

3. Holder according to Claim 1 or 2,
**characterized**
**in that** the decoupling element (7) has at least one recess (66, 69, 71, 72, 73, 74, 76, 77) which is formed at the edge of a lateral surface (68, 70) of the decoupling element and/or in that the decoupling element (7) has at least one recess (75) which is formed within a lateral surface (68) of the decoupling element (7).

4. Holder according to Claim 3,
**characterized**
**in that** the recess (66, 69, 71, 72, 73, 74, 76, 77) at the edge of the lateral surface (68, 70) of the decoupling element (7) is formed as a rounded edge portion (66, 69, 73, 74), as a bevel (71, 72, 76, 77) which extends over less than half of an axial thickness (40) of the decoupling element (7) along an axis (22) of the fastening body (4), or as a chamfer (45, 65) which extends over at least half of an axial thickness (40) of the decoupling element (7) along the axis (22) of the fastening body (4).

5. Holder according to any of Claims 1 to 4,
**characterized**
**in that** the decoupling element (7) has at least one step (79) at at least one lateral surface (68, 70), and/or in that the decoupling element (7) has at least one step (67, 78) at at least one end surface (48', 64').

6. Holder according to any of Claims 1 to 5,
**characterized in that** the decoupling element (7) has at least one contact geometry at at least one end surface (48', 64'), which at least one contact geometry varies in a circumferential direction (41) with respect to an axis (22) of the fastening body (4).

7. Holder according to Claim 6,
**characterized**
**in that** the contact geometry at the end surface (48', 64') of the decoupling element (7) is segmented in the circumferential direction (41), and/or in that a radial proportion of contact (47, 49) of the contact geometry against the end surface (48') of the decoupling element (7) varies in the circumferential direction (41).

8. Holder according to any of Claims 3 to 7,
**characterized**
**in that** the decoupling element (7) is supported at the recess (65, 66, 69, 71, 72, 73, 74, 76, 77) or at the end surface (48', 64') of the decoupling element (7) by the holding element (6) and/or at least one counterpart (21, 26) .

## Revendications

1. Support (1) de fixation d'un composant (3), en particulier d'un distributeur de carburant (3), sur un moteur à combustion interne (2), comportant au moins un élément de désaccouplement (7, 8), un corps de fixation (4), un moyen de fixation (5) et un élément de retenue (6), dans lequel le corps de fixation (4) peut être fixé sur le moteur à combustion interne (2) grâce au moyen de fixation (5), et dans lequel l'élément de retenue (6) est fixé sur le corps de fixation (4) par le biais de l'élément de désaccouplement (7, 8),
**caractérisé en ce que**
l'élément de désaccouplement (7, 8) est formé de telle sorte que, dans une direction axiale le long d'un axe (22) du corps de fixation (4) et dans une direction radiale (43) qui est orientée perpendiculairement à un axe (22) du corps de fixation (4), une courbe caractéristique de ressort non linéaire est prédéfinie, laquelle décrit une dépendance d'une force de rappel (F) agissant sur l'élément de retenue (6) le long de l'axe (22) du corps de fixation (4) par rapport à une déviation (s) de l'élément de retenue (6) le long de l'axe (22) du corps de fixation (4) par rapport au corps de fixation (4) et
**en ce qu'**un élément de précontrainte (21) est prévu, afin d'appliquer une précontrainte sur l'élément de désaccouplement (7, 8), l'élément de précontrainte (21), qui est relié au corps de fixation (4), coopérant par complémentarité de forme avec l'élément de désaccouplement (7, 8) et
**en ce que** l'élément de désaccouplement (7, 8) comprend au moins une conformation (23, 28) qui coopère par complémentarité de forme avec une conformation (25, 30) de l'élément de retenue (6) et/ou **en ce que** l'élément de désaccouplement (8) comprend au moins une conformation (24) qui coopère par complémentarité de forme avec une conformation (26) de l'élément de précontrainte (21) et **en ce que** les éléments de désaccouplement (7, 8) ne sont pas soumis à la force de fixation qui est appliquée par le moyen de fixation (5).

2. Support selon la revendication 1,
**caractérisé en ce que**
l'élément de désaccouplement (7, 8) est formé de telle sorte qu'une première direction radiale (50) et une deuxième direction radiale (51), qui sont orientées perpendiculairement à un axe (22) du corps de fixation (4), existent, directions pour lesquelles une première courbe caractéristique de ressort qui décrit une dépendance d'une force de rappel (F) agissant sur l'élément de retenue (6) le long de la première direction radiale (51) par rapport à une déviation (s) de l'élément de retenue (6) le long de la première direction radiale (50) par rapport au corps de fixation (4), et une deuxième courbe caractéristique de ressort qui décrit une dépendance d'une force de rappel (F) agissant sur l'élément de retenue (6) le long de la deuxième direction radiale (51) par rapport à une déviation (s) de l'élément de retenue (6) le long de la deuxième direction radiale (51) par rapport au corps de fixation (4), sont différentes.

3. Support selon la revendication 1 ou 2,
**caractérisé en ce que**
l'élément de désaccouplement (7) comprend au moins un évidement (66, 69, 71, 72, 73, 74, 76, 77) qui est configuré au niveau du bord d'une surface d'enveloppe (68, 70) de l'élément de désaccouplement et/ou **en ce que** l'élément de désaccouplement (7) comprend au moins un évidement (75) qui est configuré à l'intérieur d'une surface d'enveloppe (68) de l'élément de désaccouplement (7) .

4. Support selon la revendication 3,
**caractérisé en ce que**
l'évidement (66, 69, 71, 72, 73, 74, 76, 77) au niveau du bord de la surface d'enveloppe (68, 70) de l'élément de désaccouplement (7) est configuré comme arrondi d'arête (66, 69, 73, 74), comme chanfrein (71, 72, 76, 77) qui s'étend sur moins de la moitié d'une épaisseur axiale (40) de l'élément de désaccouplement (7) le long d'un axe (22) du corps de fixation (4), ou comme biseau (45, 65) qui s'étend sur au moins la moitié d'une épaisseur axiale (40) de l'élément de désaccouplement (7) le long de l'axe (22) du corps de fixation (4).

5. Support selon l'une des revendications 1 à 4,
**caractérisé en ce que**
l'élément de désaccouplement (7) comprend au moins un gradin (79) au niveau d'au moins une surface d'enveloppe (68, 70) et/ou **en ce que** l'élément de désaccouplement (7) comprend au moins un gradin (67, 78) au niveau d'au moins une surface frontale (48', 64').

6. Support selon l'une des revendications 1 à 5,
**caractérisé en ce que**
l'élément de désaccouplement (7) présente une géométrie de contact au niveau d'au moins une surface frontale (48', 64'), laquelle géométrie varie dans une direction périphérique (41) par rapport à un axe (22) du corps de fixation (4).

7. Support selon la revendication 6,
**caractérisé en ce que**
la géométrie de contact au niveau de la surface frontale (48', 64') de l'élément de désaccouplement (7) est segmentée dans la direction périphérique (41) et/ou **en ce qu'**une partie de contact radiale (47, 49) de la géométrie de contact au niveau de la surface frontale (48') de l'élément de désaccouplement (7) varie dans la direction périphérique (41).

8. Support selon l'une des revendications 3 à 7,
**caractérisé en ce que**
l'élément de désaccouplement (7) est supporté par l'élément de retenue (6) et/ou au moins une pièce conjuguée (21, 26) au niveau de l'évidement (65, 66, 69, 71, 72, 73, 74, 76, 77), respectivement au niveau de la surface frontale (48', 64') de l'élément de désaccouplement (7).
